# EUROPÄISCHE PATENTANMELDUNG

(11) **EP 4 510 318 A1**
(43) Veröffentlichungstag der Anmeldung: **19.02.2025**
(21) Anmeldenummer: 24192992.6
(22) Anmeldetag: 06.08.2024
(51) Int. Cl.: H01M 50/105, H01M 50/317

(54) **ENERGIESPEICHERZELLE**

(30) Priorität: 18.08.2023 DE 102023122196
(71) Anmelder: Carl Freudenberg KG, 69469 Weinheim (DE)
(72) Erfinder: Kritzer, Peter, Dr., 67147 Forst (DE); Schweizer, Anja, 69469 Weinheim (DE); Nahrwold, Olaf, 67071 Ludwigshafen (DE); Boscolo, Marco, 10040 Cumiana TO (IT); Bott, Franz-Rudolf, 77876 Kappelrodeck (DE); Buro, Maurizio, 10064 Pinerolo (TO) (IT); STEPHAN, Ingo, 64668 Rimbach (DE); Sertoli, Alessandro, 10063 Perosa Argentina (TO) (IT); LEICHNER, Dr. Tim, 67591 Mörstadt (DE); MÖHRING, Dirk, 69509 Mörlenbach (DE)

(57) **Zusammenfassung**

Energiespeicherzelle (1), umfassend ein Foliengehäuse (2), wobei dem Foliengehäuse (2) eine Gasablassvorrichtung (7) zugeordnet ist.

## Beschreibung

Die Erfindung betrifft eine Energiespeicherzelle, umfassend ein Foliengehäuse, welches zumindest eine Elektroden-Separator-Anordnung aufnimmt.

Energiespeichersysteme, welche Energiespeicherzellen enthalten, sind weit verbreitet und kommen insbesondere als wiederaufladbare Speicher für elektrische Energie in mobilen und stationären Systemen zum Einsatz. Dabei werden Energiespeichersysteme in Form von wiederaufladbaren Speichern in tragbaren elektronischen Geräten, beispielsweise in Messgeräten, medizinischen Geräten, Werkzeugen oder Konsumartikeln eingesetzt. Ferner werden Energiespeichersysteme in Form von wiederaufladbaren Speichern zum Bereitstellen elektrischer Energie für elektrisch angetriebene Transportmittel eingesetzt. Elektrisch angetriebene Transportmittel können dabei Zweiräder, Vierräder, beispielsweise Pkws oder auch Nutzfahrzeuge wie Busse, Lastkraftwagen, Schienenfahrzeuge oder Gabelstapler sein. Darüber hinaus werden Energiespeichersysteme auch in Schiffen und Flugzeugen eingesetzt.

Es ist auch bekannt, Energiespeichersysteme in Form von wiederaufladbaren Speichern in stationären Anwendungen vorzusehen, beispielsweise als Backup-Systeme in Netzwerkanlagen und zur Speicherung elektrischer Energie aus erneuerbaren Energiequellen.

Ein häufig eingesetztes Energiespeichersystem ist dabei ein wiederaufladbarer Speicher in Form eines Lithium-Ionen-Akkumulators. Derartige Energiespeichersysteme weisen, wie andere wiederaufladbare Speicher auch, zumeist mehrere Speicherzellen auf, welche in einem Gehäuse angeordnet sind; mehrere in einem Gehäuse angeordnete und elektrisch miteinander verbundene Energiespeicherzellen bilden dabei ein Modul.

Weitere bekannte Energiespeichersysteme sind beispielsweise Natrium-Ionen-Batterien, Lithium-Schwefel-Akkumulatoren, Feststoff-Akkumulatoren, Metall-Luft-Akkumulatoren oder auch Super-Kondensatoren.

Je nach Ausgestaltung weisen Energiespeicherzellen feste Zellgehäuse auf, bspw. bei Rundzellen oder prismatischen Zellen. Bekannt sind auch folienbasierte Zellgehäuse, bspw. bei Pouch-Zellen. Folienbasierte Zellgehäuse weisen im Vergleich zu festen Zellgehäuse insbesondere zwei Nachteile auf. Während der Produktion, insbesondere von Lithium-Ionen Energiespeicherzellen entstehen bei dem Formierung bezeichneten Fertigungsschritt innerhalb des Zellgehäuses Zellgase. Diese können bei festen Zellgehäusen über eine in das feste Zellgehäuse eingebrachte Öffnung abgelassen werden, wobei die Öffnung anschließend wieder verschlossen werden kann. Bei folienbasierten Zellgehäuse, bspw. bei Pouch-Zellen wird die Elektroden-Separator-Anordnung in einem auch als Folientasche bezeichneten Zellgehäuse angeordnet, welche mit Übermaß dimensioniert ist. Anschließend wird das Zellgehäuse mit der darin angeordneten Elektroden-Separator-Anordnung und unter Verpressung formiert. Die freigesetzten Zellgase werden in die überstehenden Bereiche der Folientasche transportiert, wobei sich eine Gastasche bildet. Diese Gastasche wird nach der Formierung abgetrennt und entsorgt. Während der Formierung kann dabei ein Gasvolumen von etwa 100 ml über einen Zeitraum von etwa 10 Stunden entstehen.

Des Weiteren ist nachteilig, dass folienbasierte Zellgehäuse gegenüber festen Zellgehäusen einen geringeren Öffnungsdruck aufweisen. Dieser beträgt bei folienbasierten Zellgehäusen zumeist weniger als 1 bar, während dieser bei festen Zellgehäusen mehr als 5 bar betragen kann. Über die Nutzungsdauer einer Energiespeicherzelle werden durch Alterungs- und Abbauprozesse innerhalb der Energiespeicherzelle Gase freigesetzt, die zu einem Druckanstieg führen. Bei Annahme eines in etwa linearen Druckanstieges über die Nutzungsdauer, kann eine prismatische Zelle etwa fünfmal länger genutzt werden, bis es zu einer Öffnung des Zellgehäuses kommt. Die Alterung einer Energiespeicherzelle stellt einen langsamen Prozess dar, so dass die dadurch freigesetzten Gasvolumina pro Zeiteinheit gering sind.

Der Erfindung liegt die Aufgabe zugrunde, eine Energiespeicherzelle bereitzustellen, welche eine verbesserte Betriebssicherheit und eine erhöhte Einsatzdauer aufweist.

Diese Aufgabe wird mit den Merkmalen von Anspruch 1 gelöst. Auf vorteilhafte Ausgestaltungen nehmen die Unteransprüche Bezug.

Die erfindungsgemäße Energiespeicherzelle umfasst ein Foliengehäuse, welches zumindest eine Elektroden-Separator-Anordnung aufnimmt, wobei dem Foliengehäuse eine Gasablassvorrichtung zugeordnet ist. Die Gasablassvorrichtung ist vorzugsweise als Einwegventil ausgebildet.

Energiespeicherzellen mit einem Foliengehäuse sind auch als Pouch-Zellen bekannt. Die Elektroden-Separator-Anordnung ist dabei in einem aus Folie ausgebildeten Gehäuse aufgenommen, wobei das Foliengehäuse in Form eines Beutels mit einer Öffnung an einer Seite ausgebildet sein kann. Die Öffnung wird vorzugsweise nach dem Formierungsprozess durch eine Siegelnaht verschlossen. Die Siegelnaht wird durch Elektroden, die zur elektrischen Kontaktierung der Elektroden-Separator-Anordnung aus dem Foliengehäuse herausragen, unterbrochen.

Das Foliengehäuse kann aus einer einteiligen Folie ausgebildet sein, welche entlang einer Kante gefaltet ist. Alternativ kann das Foliengehäuse eine erste Folie und eine zweite Folie aufweisen, die entlang einer umlaufenden Kante mittels einer Siegelnaht miteinander verbunden sind. Bei dieser Ausgestaltung ist das Foliengehäuse zweiteilig ausgebildet, wobei eine erste Folie die erste Hauptseite und eine zweite Folie die zweite Hauptseite der Elektroden-Separator-Anordnung bedeckt. Die Folien überlappen dabei die Elektroden-Separator-Anordnung und beide Folien berühren sich entlang eines umlaufenden Randes.

Dabei ist das Foliengehäuse vorzugsweise im Bereich der Siegelnaht stoffschlüssig verbunden. Dabei kann die Siegelnaht durch eine Klebeverbindung verschlossen sein. Alternativ kann die Siegelnaht auch durch eine Schweißverbindung verschlossen sein.

Die erfindungsgemäß Gasablassvorrichtung, bzw. das erfindungsgemäße Einwegventil ist vorzugsweise als unidirektional wirkendes Ventil ausgebildet. Das Ventil ist dabei ausgebildet, im Inneren des Zellgehäuses entstehende Drücke abbauen zu können, gleichzeitig aber das Innere des Foliengehäuses gegenüber von der Umgebung eindringender Medien abzudichten.

Das Einwegventil ist dabei insbesondere ausgebildet, stets, also auch während und nach dem Druckabbau, den Weg von außen nach innen verschließen, so dass das Eindringen von Medien wie Sauerstoff oder Feuchtigkeit ausgeschlossen werden kann.

Vorzugsweise ist das Einwegventil in der Siegelnaht platziert, so dass keine zusätzliche Öffnung des Foliengehäuses notwendig ist.

Das erfindungsgemäß Einwegventil ermöglicht ein Ablassen der Formierungsgase, die bei der Zellfertigung entstehen. Dadurch kann die bislang notwendige Gastasche entfallen, was zur Reduzierung von Abfall beiträgt und den CO₂-Fußabdruck bei der Zellproduktion verringert. Des Weiteren ergibt sich eine Kosteneinsparung durch Verringerung des Materialeinsatzes und Verkürzung der Produktionszeit.

Das erfindungsgemäße Einwegventil ermöglicht ferner ein Ablassen von Gasen, die bei der Alterung der Energiespeicherzelle entstehen.

Es hat sich gezeigt, dass bei den oben beschriebenen Prozessen die freigesetzten Gasvolumina pro Zeiteinheit gering sind und typischerweise weniger als 10 ml pro Stunde betragen. Dementsprechend kann das Einwegventil klein ausgeführt werden.

Das Einwegventil kann eine Kanalstruktur umfassen. Diese erstreckt sich vorzugsweise innerhalb des Foliengehäuses und kann einen Sammler darstellen, welcher im Inneren des Foliengehäuses entstehende gasförmige Abbauprodukte aufnimmt. Des Weiteren kann die Kanalstruktur eine Leitung umfassen, durch die die gasförmigen Produkte transportiert werden.

Vorzugsweise umfasst die Kanalstruktur eine Leitung, die vom Inneren des Foliengehäuses nach außen geführt ist. Die Durchführung der Leitung ist dabei vorzugsweise im Bereich der Siegelnaht angeordnet. Dementsprechend ermöglicht die Kanalstruktur das Ableiten von gasförmigen Abbauprodukten und dergleichen vom Inneren des Foliengehäuses nach außen. Die Durchführung der Kanalstruktur im Bereich der Siegelnaht ist vorteilhaft, weil montagebedingt ohnehin eine Öffnung vorhanden ist, welche nach dem Platzieren der Elektroden-Separator-Anordnung verschlossen wird. Besonders bevorzugt ist es, wenn die Kanalstruktur im Bereich der Siegelnaht stoffschlüssig mit dem Foliengehäuse verbunden ist. Die Durchführung der Kanalstruktur durch das Foliengehäuse ist vorzugsweise im Bereich der Ableitungsbleche der aus dem Foliengehäuse hervorstehenden Elektroden platziert. In diesen Bereichen liegt bereits durch die durchgeführten Ableitungsbleche eine lokale Verdickung der Siegelnaht vor, die dauerhaft abgedichtet ist. Durch Anordnen der Leitung in diesem Bereich, bspw. neben einem Ableitungsblech, kann eine zusätzliche Unstetigkeit in der Siegelnaht vermieden werden.

Die Leitung kann in ein Einwegventil in Form eines Rückschlagventils münden. Bei dieser Ausgestaltung weist das Rückschlagventil einen Abstand zu der Energiespeicherzelle auf und kann ein separates Bauteil darstellen. Über die Leitung ist das Rückschlagventil strömungsleitend mit dem Inneren des Foliengehäuses verbunden. Hierbei ist vorteilhaft, dass die Gestalt des Rückschlagventils unabhängig ist von der Ausgestaltung der Energiespeicherzelle. Es ist auch denkbar, dass mehrere Leitungen in ein Rückschlagventil münden.

Denkbar ist auch, dass das Rückschlagventil erst nach der Formierung auf die Leitung aufgebracht wird. Die Leitung führt dabei die bei der Formierung freigesetzten Gase ab; das Rückschlagventil stellt einen sicheren Betrieb der Zelle dar.

Vorzugsweise ist die Leitung aus Kunststoff ausgebildet, aufgrund der Temperaturbeständigkeit sind dabei Polyetheretherketon (PEEK) und Polyphenylidensulfid (PPS) besonders bevorzugt. Denkbar sind aber auch metallische Leitungen, bspw. aus Aluminium. Hierbei muss sichergestellt werden, dass das innere Leitungsende nicht mit der Elektroden-Separator-Anordnung in Kontakt kommt, um elektrische Kurzschlüsse zu vermeiden. Denkbar sind auch Strömungsleiter bestehend aus anorganischen Stoffen, wie Keramik, Glas, Kohlenstoff. Die Leitung muss den bei der Versiegelung der Zelle die resultierenden hohen Drücke und Temperaturen widerstehen könne, ohne dass der freie Querschnitt verloren geht.

Denkbar ist es zudem, die währen des Betriebs beim Öffnen des Ventils freigesetzten Gase mittels eines Gassensors zu detektieren. So lassen sich z.B. aus der chemischen Zusammensetzung der freigesetzten Gase Rückschlüsse auf den Gesundheitszustand der Zelle ziehen bzw. eine Frühwarnfunktion für ein thermisches Durchgehen der Zelle schaffen.

Eine Ausgestaltung der erfindungsgemäßen Energiespeicherzelle wird nachfolgend anhand der Figuren näher erläutert. Die Figuren zeigen, jeweils schematisch:
- Fig. 1: zeigt eine Energiespeicherzelle in Form einer Pouch-Zelle sowie ein Ableitungsblech gemäß einer ersten Ausgestaltung;
- Fig. 2: zeigt eine Energiespeicherzelle in Form einer Pouch-Zelle sowie ein Ableitungsblech gemäß einer zweiten Ausgestaltung;
- Fig. 3: zeigt ein Ableitungsblech mit einem integrierten Überdruckventil. In das Ableitungsblech ist ein Rohr integriert;
- Fig. 4: zeigt eine Pouch-Zelle mit einem integrierten Einwegventil;
- Fig. 5: zeigt Querschnitte von Ableitungsblechen, in welche Rohre integriert sind;
- Fig. 6: zeigt ein Einwegventil, welches direkt in die Siegelnaht integriert ist;
- Fig. 7: zeigt ein Modul aus mehreren Pouch-Zellen, bei welchen die Kanäle einzelner Zellen in ein einzelnes Überdruckventil münden.

Die Figuren zeigen eine Energiespeicherzelle 1, umfassend ein Foliengehäuse 2, welches aus einer ersten Folie und einer zweiten Folie ausgebildet ist, wobei die erste Folie und die zweite Folie entlang einer umlaufenden Kante mittels einer Siegelnaht 3 stoffschlüssig miteinander verbunden sind.

Das Foliengehäuse 2 nimmt eine Elektroden-Separator-Anordnung auf, wobei Ableitungsbleche 4, 5 im Bereich der Siegelnaht 3 aus dem Foliengehäuse 2 hervorstehen. Über die Ableitungsbleche 4, 5 kann die Elektroden-Separator-Anordnung elektrisch leitend kontaktiert werden.

Im Bereich der Siegelnaht 3 ist den Ableitungsblechen 4, 5 eine zusätzliche Siegelfolie 6 zugeordnet, die beidseitig die Ableitungsbleche 4, 5 umschließt und diese bei der Zellfertigung an die Siegelnaht 3 bindet. Im Bereich der Durchführung der Ableitungsbleche 4, 5 durch die Siegelnaht 3 entsteht eine Verdickung.

Die mehrlagig ausgebildeten Folien des Foliengehäuses 2 umfassen eine zentrale Schicht aus Aluminium, auf der Innenseite eine haftvermittelnde Folie, z.B. auf der Basis eines polyolefinischen, nicht-leitenden Haftvermittlers und auf der Außenseite eine Kunststoffbeschichtung. Die äußere Folie kann auf einem Polyamid basieren.

Bei der vorliegenden Ausgestaltung ist die Energiespeicherzelle 1 als Lithium-Ionen-Akkumulator ausgebildet. Energiespeicherzellen 1 sind Alterungsprozessen unterworfen, was mit einer Zersetzung der chemischen Komponenten der Elektroden-Separator-Anordnung einhergeht. Dabei können sich im Inneren des Foliengehäuses 2 Gase bilden, welche zu einem Druckanstieg führen. Dadurch bläht sich das Foliengehäuse 2 auf. Eine Funktionsfähigkeit der Energiespeicherzelle 1 ist in der Regel dann noch gegeben, wenn der Innendruck innerhalb des Foliengehäuses 2 gegenüber dem Umgebungsdruck höchstens 1 bar erhöht ist. Überschreitet der Innendruck diesen Wert, kommt es zu einer irreversiblen Schädigung der Energiespeicherzelle 1. Um zu verhindern, dass sich das Foliengehäuse 2 unkontrolliert öffnet, ist eine Gasablass-Vorrichtung 7 in Form eines Rückschlagventils 8, bzw. Einwegventils vorgesehen. Das Rückschlagventil 8, bzw. Einwegventil ist so ausgebildet, dass sich dieses öffnet, wenn der Innendruck innerhalb des Foliengehäuses 2 gegenüber dem Umgebungsdruck um 0,5 bar erhöht ist.

Bei Verwendung der Zellen in Flugzeugapplikationen muss das Einwegventil so ausgelegt sein, dass es Druckdifferenzen zwischen dem Zellinneren und dem Luftdruck der jeweiligen Flughöhe tolerieren kann, ohne versehentlich zu öffnen. Hierbei sind Druckdifferenzen von 1,0 bar möglich.

Die Gasablass-Vorrichtung 7 umfasst eine Kanalstruktur 9 mit einer Leitung, wobei die Leitung vom Inneren des Foliengehäuses 2 nach außen geführt ist. Die Durchführung der Leitung der Kanalstruktur 9 erfolgt im Bereich der Siegelnaht 3. Die Siegelnaht 3 ist durch einen stoffschlüssigen Verbund der Folien realisiert, wobei auch die Kanalstruktur 9 stoffschlüssig mit dem Foliengehäuse 2 verbunden ist. Die Kanalstruktur 9 ist aus Kunststoff, in diesem Ausführungsbeispiel aus Polyetheretherketon (PEEK) ausgebildet.

Die Leitung der Kanalstruktur 9 mündet in ein Einwegventil 7, bzw. Rückschlagventil, welches von der Energiespeicherzelle 1 beabstandet ist.

Die Ausführung des Rückschlagventils 7, bzw. Einwegventils kann dabei aus einem federbelasteten Kugelventil bestehen. Alternativ denkbare Ausgestaltungen von Rückschlagventilen sind darüber hinaus federbelastete Ventile mit Kugel- oder Kegelabdichtung, druckschließende Rohrventile mit Kugel- oder Kegelabdichtkörper, Schlauchventile, feder- oder druckbelastete Klappenventile, feder- oder druckbelastete Schiebeventile, Mikroventile, bspw. auf Halbleiterbasis oder Magnetventile.

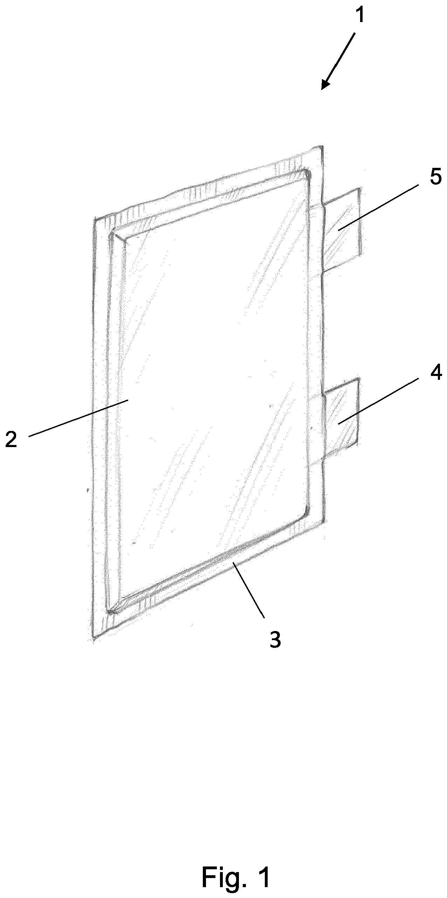

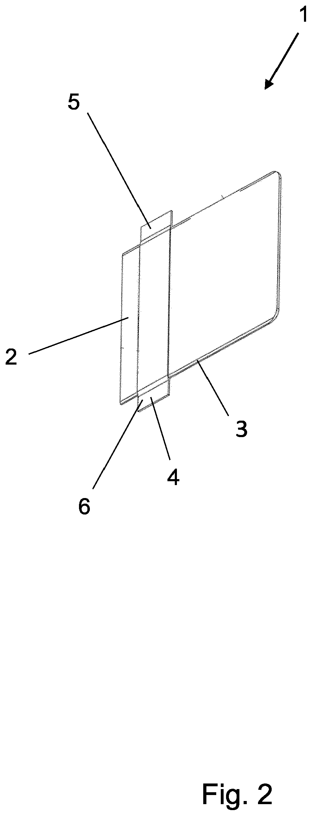

Fig. 1 und Fig. 2 zeigen jeweils eine Energiespeicherzelle 1 aus einem Foliengehäuse 2, welches umfänglich durch eine Siegelnaht 3 verschlossen ist. Aus dem Foliengehäuse 2 ragen die beiden Ableitungsbleche 4, 5 der beiden Pole heraus. Auf beiden Ableitungsblechen 4, 5 sind beidseitig streifenförmige Siegelfolien 6 aufgebracht. Die Siegelfolie 6 besteht aus einem haftvermittelnden Polymer, z.B. einem Maleinsäure-Anhydrid / Polypropylen Copolymer.

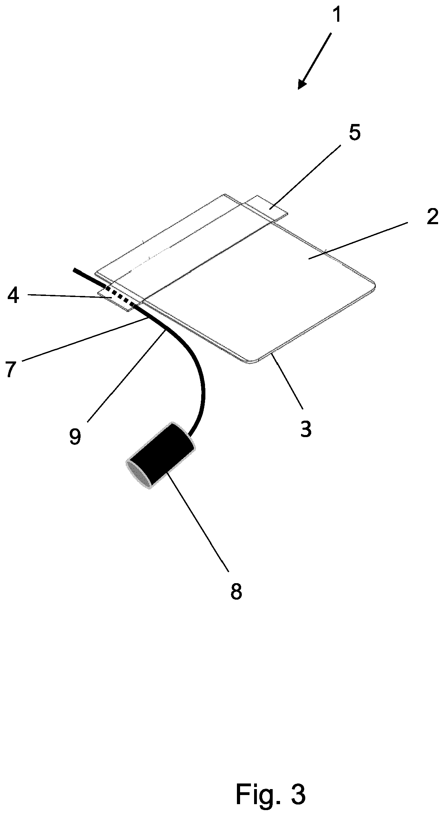

Fig. 3 zeigt ein Ableitungsblech 4, 5, in welches eine Gasablass-Vorrichtung 7 enthaltend ein Einwegventil 8 integriert ist. Das Einwegventil 8 ist dabei beabstandet und wird durch eine Kanalstruktur 9 mit einem Ableitungsblech 4, 5 verbunden. Die Kanalstruktur 9 ist im Bereich der Siegelfolie 6 durch die Siegelnaht 3 abgedeckt. In diesem Bereich ist die Kanalstruktur 9 beidseitig von der Siegelfolie 6 umgeben.

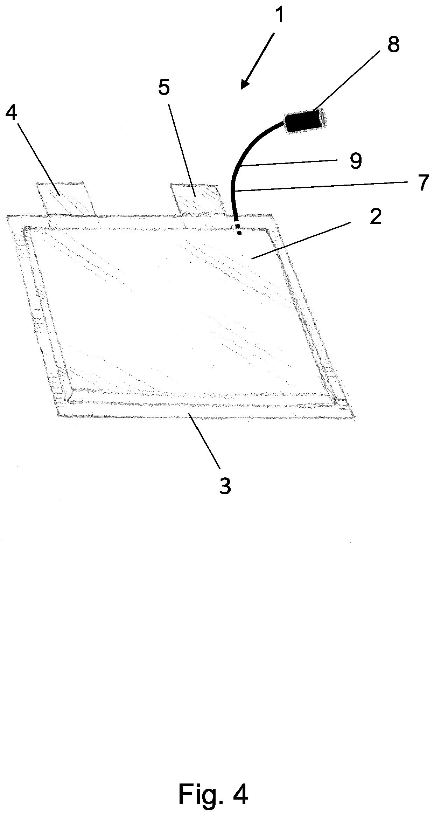

Fig. 4 zeigt die Anordnung aus Fig. 3 in einer Energiespeicherzelle 1 in Form einer Pouch-Zelle.

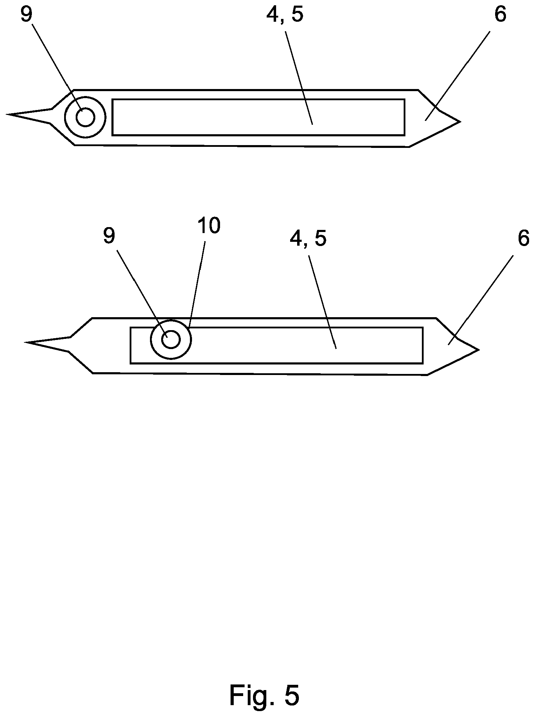

Fig. 5 zeigt die Durchführung der Kanalstruktur 9 im Bereich der Ableitungsbleche 4, 5. Typischerweise beträgt die Dicke der Ableitungsbleche 0,2 mm bis 1 mm. Der äußere Durchmesser der Kanalstruktur 9 beträgt höchstens 1,2 mm, so dass diese gut in die Siegelfolie 6 integrierbar ist. Die Kanalanordnung 9 ist benachbart der Ableitungsbleche 4, 5 platziert, alternativ - in der unteren Darstellung gezeigt - in einer Aussparung des Ableitungsbleches 4, 5.

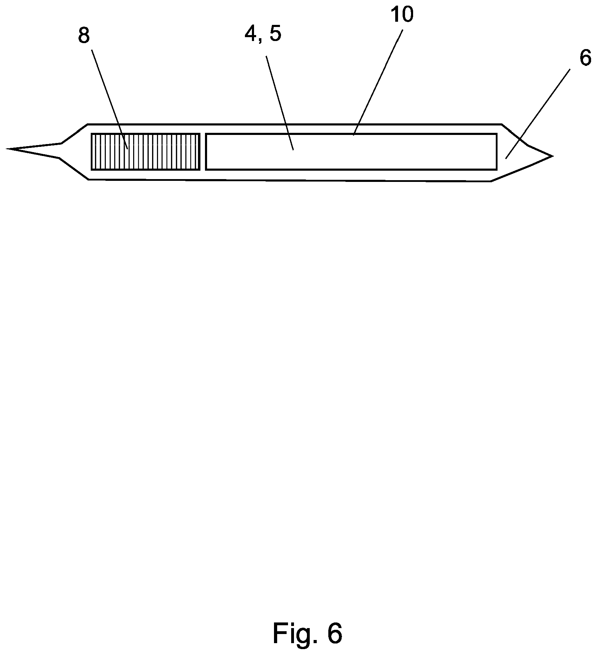

Fig. 6 zeigt die Durchführung 10 eines Ableitungsblechs 4, 5. In diese Durchführung 10 ist auch ein Einwegventil 8 integriert, welches beidseitig von der Siegelfolie 6 umgeben ist. Eine Kanalstruktur entfällt bei dieser Ausführung.

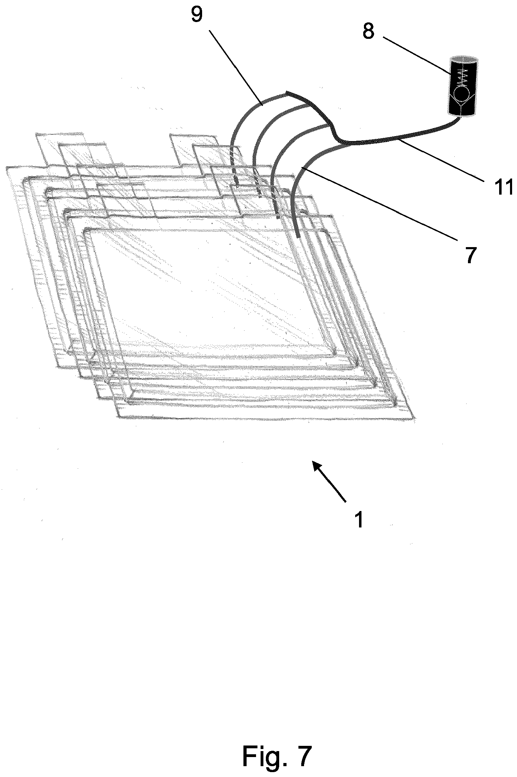

Fig. 7 zeigt eine Anordnung mehrerer Energiespeicherzellen 1. Die in einen Sammelkanal 11 zusammenlaufendenden Kanalstrukturen 9 der einzelnen Energiespeicherzellen 1 münden in ein gemeinsames Einwegventil 7.

## Patentansprüche

1. Energiespeicherzelle (1), umfassend ein Foliengehäuse (2), **dadurch gekennzeichnet, dass** dem Foliengehäuse (2) eine Gasablassvorrichtung (7) zugeordnet ist.

2. Energiespeicherzellen nach Anspruch 1, **dadurch gekennzeichnet, dass** das Foliengehäuse (2) zumindest eine Elektroden-Separator-Anordnung aufnimmt.

3. Energiespeicherzelle nach Anspruch 1 oder 2, **dadurch gekennzeichnet, dass** dem Foliengehäuse (2) eine Gasablassvorrichtung (7) mit einem Einwegventil (8) zugeordnet ist.

4. Energiespeicherzelle nach einem der Ansprüche 1 bis 3, **dadurch gekennzeichnet, dass** das Foliengehäuse (2) zumindest abschnittsweise durch eine Siegelnaht (3) verschlossen ist.

5. Energiespeicherzelle nach einem der Ansprüche 1 bis 4, **dadurch gekennzeichnet, dass** die Gasablassvorrichtung (7) eine Kanalstruktur (9) umfasst.

6. Energiespeicherzelle nach Anspruch 5, **dadurch gekennzeichnet, dass** die Kanalstruktur (9) eine Leitung umfasst, die vom Inneren des Foliengehäuses (2) nach außen geführt ist.

7. Energiespeicherzelle nach Anspruch 6, **dadurch gekennzeichnet, dass** die Siegelnaht (3) eine Siegelfolie (6) umfasst, wobei die Durchführung der Leitung im Bereich der Siegelfolie (6) und einem Ableitungsblech (4, 5) angeordnet ist.

8. Energiespeicherzelle nach einem der Ansprüche 5 bis 7, **dadurch gekennzeichnet, dass** die Kanalstruktur (9) in das Einwegventil (8) mündet.

9. Energiespeicherzelle nach einem der Ansprüche 5 bis 8, **dadurch gekennzeichnet, dass** die Kanalstruktur (9) aus Kunststoff ausgebildet ist.

10. Energiespeicherzelle nach einem der Ansprüche 5 bis 9, **dadurch gekennzeichnet, dass** die Kanalstruktur (9) aus Polyetheretherketon oder Polyphenylidensulfid ausgebildet ist.

11. Energiespeicherzelle nach einem der Ansprüche 5 bis 7, **dadurch gekennzeichnet, dass** die Kanalstruktur (9) aus Metall ausgebildet ist.

12. Energiespeicherzelle nach einem der Ansprüche 5 bis 7, **dadurch gekennzeichnet, dass** die Kanalstruktur (9) aus einem anorganischen Werkstoff ausgebildet ist.

13. Energiespeicherzelle nach einem der Ansprüche 7 bis 12, **dadurch gekennzeichnet, dass** das Einwegventil (8) in die Durchführung (10) zumindest eines Ableitungsbleches (4, 5) integriert ist.

14. Energiespeicherzelle nach einem der Ansprüche 5 bis 13, **dadurch gekennzeichnet, dass** der hydraulische Durchmesser der Kanalstruktur (9) zwischen 0,1 mm bis 1,5 mm beträgt.

15. Energiespeicherzelle nach einem der Ansprüche 5 bis 13, **dadurch gekennzeichnet, dass** die maximale Dicke der Kanalstruktur (9) zwischen 0,2 mm bis 1,7 mm beträgt.

16. Energiespeicherzelle nach einem der Ansprüche 5 bis 13, **dadurch gekennzeichnet, dass** der Öffnungsdruck des Einwegventils (8) 0,05 bis 1,2 bar beträgt

17. Energiespeicherzelle nach einem der Ansprüche 5 bis 14, **dadurch gekennzeichnet, dass** der Volumentransfer von Gasen durch die Kanalstruktur (9) und/oder das Einwegventils (8) bei einer Druckdifferenz von 0,5 bar mindestens 5 ml pro Minute beträgt.
